# EUROPEAN PATENT SPECIFICATION

(11) **EP 2 704 290 B1**
(45) Date of publication and mention of the grant of the patent: **28.09.2022**
(21) Application number: 13181078.0
(22) Date of filing: 20.08.2013
(51) Int. Cl.: H02J 7/00, B60L 1/00, H02J 4/00, H04N 1/00

(54) **Vehicle information control device with load management function**
Vorrichtung zur Fahrzeuginformationssteuerung mit Lastverwaltungsfunktion
Dispositif de commande d'informations de véhicule avec fonction de gestion de charge

(30) Priority: 28.08.2012 JP 2012187572
(43) Date of publication of application: 05.03.2014
(73) Proprietor: Hitachi, Ltd., Tokyo 100-8280 (JP); Hitachi Building Systems Co., Ltd., Tokyo 101-8941 (JP)
(72) Inventor: Suzuki, Mikiya, Chiyoda-ku, Tokyo 100-8280 (JP); Aoki, Koji, Chiyoda-ku, Tokyo 100-8280 (JP); Ito, Satoru, Chiyoda-ku, Tokyo 100-8280 (JP); Ikeda, Takemitsu, Hitachinaka-shi Ibaraki 312-8506 (JP)
(74) Representative: Mewburn Ellis LLP

(56) References cited:
- EP-A1- 2 050 611
- JP-A- H09 130 901
- KR-A- 20120 051 281

## Description

### BACKGROUND OF THE INVENTION

### Field of the Invention

The present invention relates to a vehicle information control device with a load management function.

### Description of the Related Art

Configurations of apparatuses mounted on vehicles have changed in various ways with an advance in the computerization of the vehicles. It is difficult to provide each apparatus with a function related to the entire formation of the vehicles, such as determining operation of an apparatus while figuring out operation states of the other apparatuses. Therefore, a function of managing the entire vehicle formation by a vehicle information control device that can manage information of the entire vehicles and that can check the operation states of the apparatuses mounted on the vehicles is added in many cases.

In general, a system of activating loads of a plurality of apparatuses mounted on a plurality of vehicles based on priorities so as to set the current supplied to the loads of the apparatuses within a rated range is performed as a load management function in a train with connected vehicles (Japanese Patent Laid-Open Publication No. 61-164477, Patent Document 1). However, arbitrary selection of devices for limiting the load capacities from various devices with different load capacities is difficult in the system, when the load capacities of all apparatuses cannot be secured due to malfunction in part of the power supply devices mounted on the plurality of vehicles. Furthermore, the priorities or load limits need to be changed by hardware or software when part of the apparatuses with high priorities need to be limited to operate apparatuses with low priorities in the operation of the vehicles. There is a problem that the user cannot immediately set the priorities or load limits.

EP A 2050611 proposes a control apparatus for an electric vehicle. JP H09 130901 proposes another control device. KR A 2012 0051281 proposes an apparatus for controlling a battery of an electric vehicle. However, none of these documents relates to load management for setting power within capacity ranges of operating vehicle power supplies mounted on a plurality of vehicles.

### SUMMARY OF THE INVENTION

With a reduction in the capacity of the total power of the entire vehicles, a vehicle information control device performs a load management function of limiting loads of apparatuses according to states of the apparatuses mounted on the vehicles within a capacity range and calculating and distributing surplus power, the vehicle information control device comprising: a screen for displaying states of the apparatuses that allows easily determining the apparatuses for limiting the load capacities; a screen for changing load limits; and a screen for changing priorities, wherein from the screen for displaying the states of the apparatuses that allows easily determining the apparatuses for limiting the load capacities, the priorities and the load limits can be arbitrarily set by key operation corresponding to the screen for changing the load limits and corresponding to the screen for changing the priorities.

The user can arbitrarily set the priorities and the load limits, and specifically, simple and collective setting by only the screen operation is possible. As a result, even if an apparatus with a low priority needs to be temporarily operated depending on the operation state of the vehicles, the apparatus can be operated while securing the minimum required electric energy in the operation of the vehicles.

The present invention provides a vehicle information control device according to claim 1.

### BRIEF DESCRIPTION OF THE DRAWINGS

FIG. 1 is a block diagram showing a configuration of a vehicle information control device;
FIG. 2 shows input/output determination processing details (processing flow);
FIG. 3 shows input/output determination processing details when vehicle transmission is abnormal (processing flow);
FIG. 4 is a screen display example showing apparatus states for limiting loads;
FIG. 5 is a screen display example of setting validation/invalidation of limits of the loads; and
FIG. 6 is a screen display example of setting an order of priority activation.

### DETAILED DESCRIPTION OF THE PREFERRED EMBODIMENTS

Hereinafter, embodiments of the present invention will be described with reference to the drawings.

### [First Embodiment]

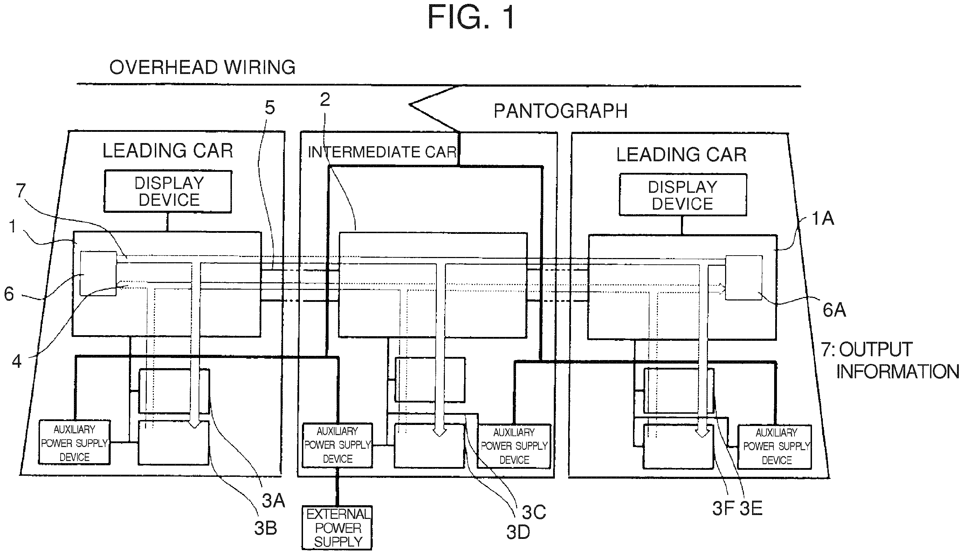

FIG. 1 is a block diagram showing a configuration of a vehicle information control device indicating an embodiment of the present invention.

Central processing units 1 and 1A, included in leading vehicles, collect information of vehicles to execute processing of the entire formation. A terminal processing device 2 transmits input/output signals from vehicle apparatuses mounted on intermediate vehicles other than the leading vehicle as well as output information processed by the terminal processing device 2 to the central processing units 1 and 1A. Reference numerals 3A to 3F denote loads of the vehicle apparatuses, and reference numeral 4 denotes input information from the loads of the entire vehicles. The central processing units 1 and 1A receive the input information 4 from the loads of the entire vehicles through a core transmission 5 and executes input/output determination processes 6 and 6A of determining activation/termination within the power supply capacities of the vehicles based on the received information. Results determined in the input/output determination processes 6 and 6A by the central processing units 1 and 1A are handled as output information 7, and instructions are transmitted to the vehicle apparatuses through the core transmission 5. The vehicle apparatuses are activated based on the output information 7 by using power supplies from overhead wiring or external power supplies.

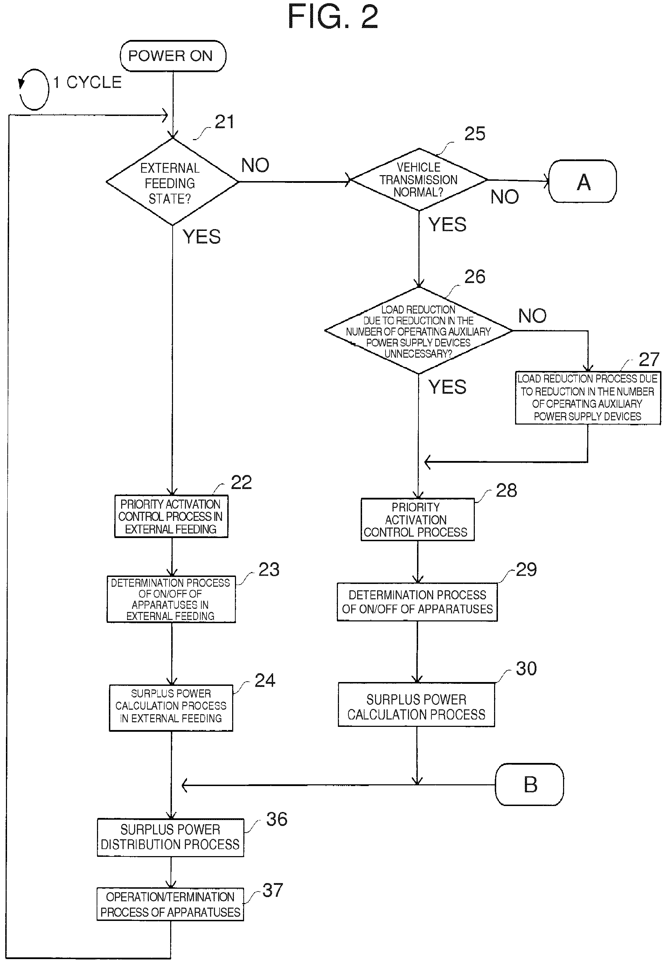

FIG. 2 is an example of a flow chart describing an input/output determination process.

When the vehicle power supply is turned on, a feeding state to the vehicle (for example, external feeding state from an external power supply outside of the vehicle) is determined in a process 21. If the state is the external feeding state (YES in process 21), the process branches to a process 22 to execute a priority activation control process in external feeding. In the following process 23, ON/OFF of the apparatuses mounted on the vehicle in external feeding is determined. In the following process 24, surplus power is calculated from the total electric energy usable in external feeding and the currently used electric energy. In the following process 36, the surplus power is distributed to the apparatuses with different loads between the cars, such as air conditioners, by taking abnormal states of the apparatuses into account. In a process 37, operation/termination instructions of the apparatuses are output.

On the other hand, if the state is not the external feeding state (NO in process 21), the process branches to a process 25 to determine whether the vehicle transmission is normal. If it is determined that the vehicle transmission is normal (YES in process 25), the process branches to a process 26 to determine whether a load reduction process due to a reduction in the number of operating auxiliary power supply devices in the entire formation is unnecessary. If the load reduction process is unnecessary (YES in process 26), priority activation control is performed in the following process 28, and ON/OFF of the apparatuses is determined in a process 29. In the following process 30, the surplus power is calculated from the total electric energy usable by the vehicles and the currently used electric energy. In the following process 36, the surplus power is distributed to the apparatuses with different loads between the cars, such as air conditioners, by taking abnormal states of the apparatuses into account. In the process 37, operation/termination instructions of the apparatuses are output.

If the load reduction process due to a reduction in the number of operating auxiliary power supply devices in the entire formation is necessary (NO in process 26), the process branches to a process 27 to execute a reduction process of limiting the loads of the apparatuses so as not to affect the operation of the vehicles. For example, the activation of equipment that does not affect the operation of the vehicles, such as a water heater and a kitchen, is terminated in part of the cars. Apparatuses that affect the operation of the vehicles, such as compressors, are limited by, for example, 50% according to the number of operating auxiliary power supply devices. In this way, load capacities of the apparatuses necessary for the operation of the vehicles are secured. After the load capacities of the apparatuses necessary for the operation of the vehicles are secured, the following processes 28 to 30, 36, and 37 are executed.

In this way, the management of both securing the load capacities of the apparatuses necessary for the operation of the vehicles and distributing the power to the other apparatuses, such as air conditioners, from the surplus power can be realized.

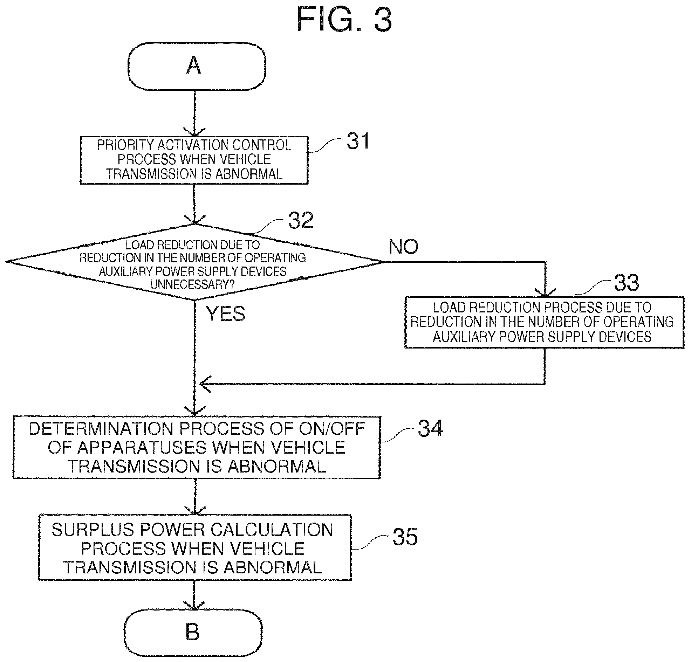

FIG. 3 is an example of a flow chart describing an input/output determination process when the vehicle transmission is abnormal.

If it is determined that the vehicle transmission is abnormal (NO in process 25), a priority activation control process when the vehicle transmission is abnormal is executed in the following process 31, and whether a load reduction process due to a reduction in the number of operating auxiliary power supply devices in vehicles with normal vehicle transmission is unnecessary is determined in the following process 32. If the load reduction process is unnecessary (YES in process 32), the process branches to a process 34, and ON/OFF of the apparatuses when the vehicle transmission is abnormal is determined. In the following process 35, maximum electric energy used by the vehicle with abnormal vehicle transmission is calculated based on the car with the transmission abnormality, and surplus power is calculated from the calculated maximum electric energy used by the vehicle with abnormal vehicle transmission, total electric energy usable by the vehicles with normal vehicle transmission, and the currently used electric energy. In the following process 36, the surplus power is distributed to the apparatuses with different loads between the cars, such as air conditioners, by taking abnormal states of the apparatuses into account. In the process 37, operation/termination instructions of the apparatuses are output.

If the load reduction process is necessary in the process 32 (NO in process 32), a reduction process of limiting the loads of the apparatuses is executed in the following process 33 so as not to affect the operation of the vehicles. After the load capacities of the apparatuses necessary for the operation of the vehicles are secured, the following processes 34 to 37 are executed.

In this way, even if the vehicle transmission is abnormal, the surplus power can be secured to distribute power to other apparatuses such as air conditioners, and the loads suitable for the operation of the vehicles can be activated and terminated.

Therefore, the central processing units of the leading vehicles can comprehensively and collectively execute a load management function of the vehicle apparatuses, and for example, a user (such as a driver and repair personnel) can immediately control the priority activation or the load limits from the driver's seat or the like.

### [Second Embodiment]

In the first embodiment, the vehicle information control device featured by a load management function of limiting the loads of the apparatuses to calculate and distribute the surplus power has been described. In a second embodiment, an example of simply and collectively changing the load limits of the apparatuses by only screen operation of a display device will be specifically described.

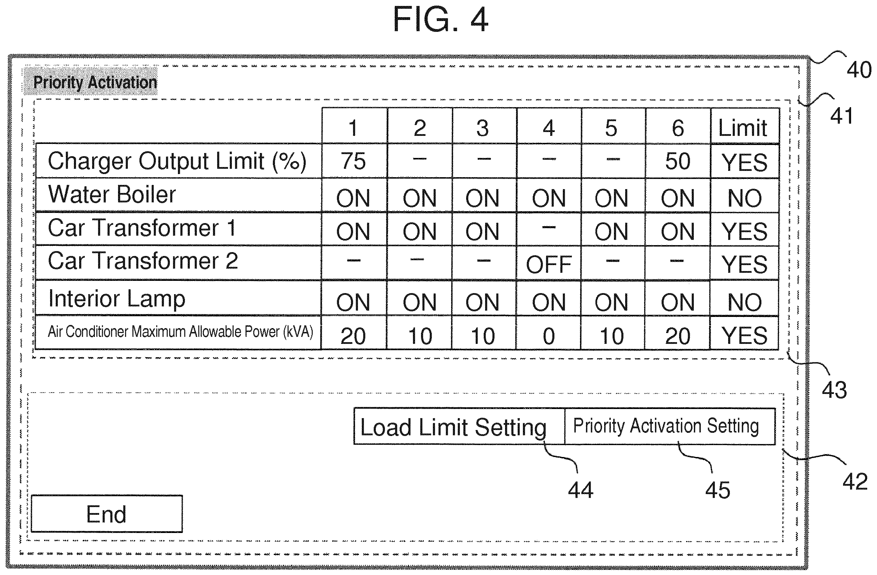

FIG. 4 is a display example of a screen indicating states of apparatuses for limiting the loads.

A display screen 40 of a display device not shown has a screen format 41 including: a key area 42 for screen transition and the like; and a display area 43 for displaying, for each vehicle (car), operation states of the apparatuses for limiting the loads.

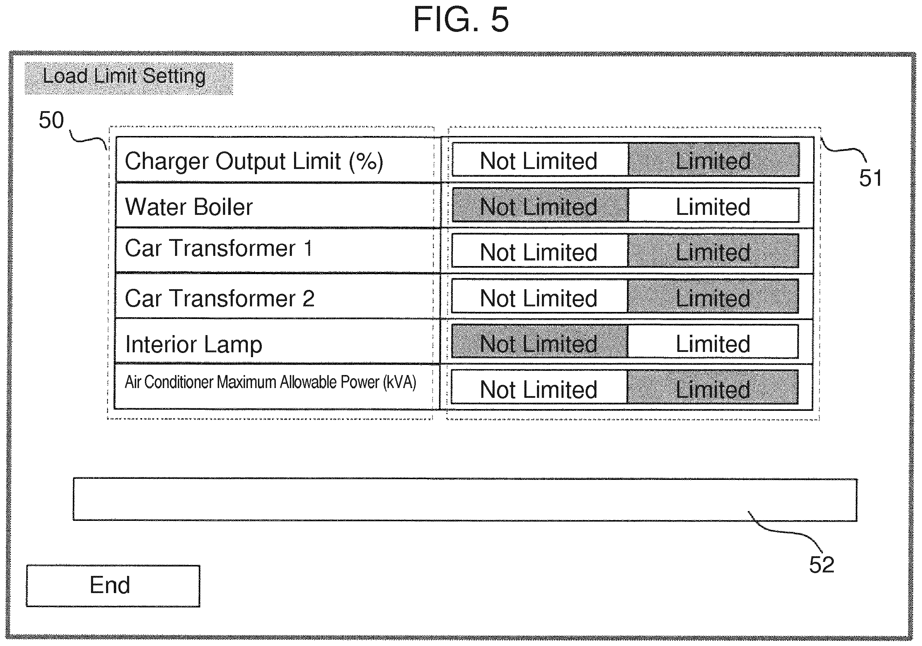

To change the load limits, the key area 42 for screen transition and the like is provided with a "load limit setting" key 44 for shifting the screen to a screen for setting the load limits. When the "load limit setting" key 44 is selected and input, the screen shifts to a "load limit setting" screen shown in FIG. 5.

FIG. 5 is a display example of the "load limit setting" screen for setting validation/invalidation of the load limits.

A "limited" key and a "not limited" key shown in 51 are arranged for each apparatus for limiting the loads shown in 50. When the key is selected and input, the key enters a pressed state in a state that the validation/invalidation can be set, and the set information is reflected on the process 27 of FIG. 2 or the process 33 of FIG. 3 to perform the setting. If the minimum required electric energy of the apparatus in the operation of the vehicle cannot be secured by invalidating the load limit, a guidance indicating a cause (reason) that the load limit cannot be invalidated is displayed on a guidance display area 52, and the key operation is invalidated.

As a result, when load does not have to be limited, the load limit instructions can be simply and collectively removed only by the screen operation of the display device, without inhibiting the operation of the vehicles.

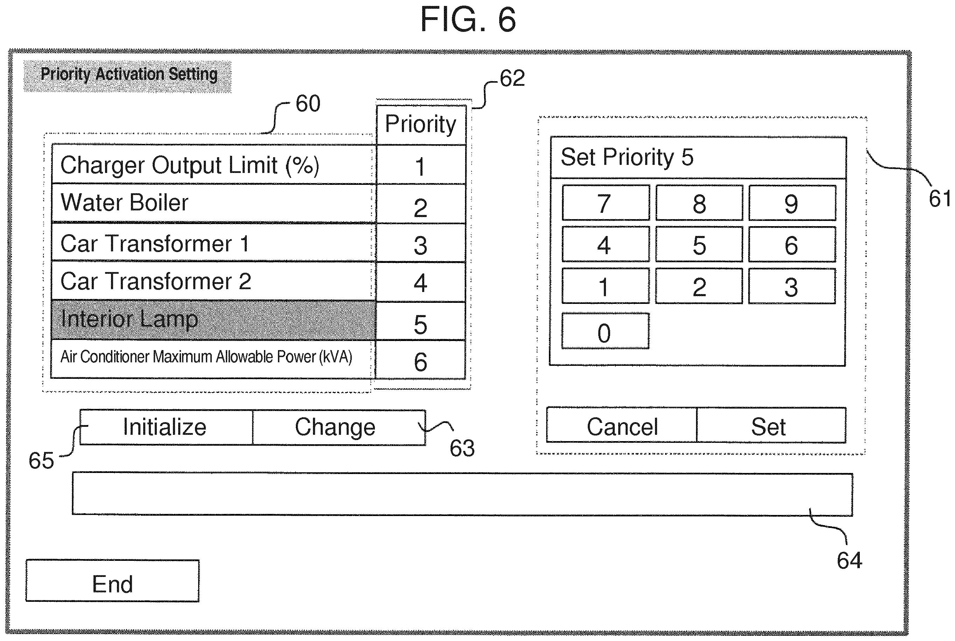

When the order of priority activation is changed as necessary, a "priority activation setting" key 45 for switching the screen to a screen for changing the order of the priority activation is arranged as shown in FIG. 4. When the "priority activation setting" key 45 is selected and input, the screen is switched to a "priority activation setting" screen shown in FIG. 6.

FIG. 6 is a display example of the "priority activation setting" screen for setting the order of priority activation.

Selection keys of the apparatuses for limiting the loads shown in 60 are arranged, and a priority display area 62 for displaying priorities that are set according to the apparatuses is arranged. A display area 61 is also arranged to display keys for changing the priorities (for example, numeric keys as shown in FIG. 6), a display area for displaying the priority selected by the keys for changing the priorities (above the arrangement of the numeric keys of FIG. 6), a setting key for setting the priority selected by the keys for changing the priorities, and a cancel key for cancelling the priority selected by the keys for changing the priorities.

When the setting key for setting the priority is selected and input, the same value as in the display area for displaying the priority selected by the keys for changing the priorities is displayed on the priority display area 62. To carry out the order activation by the priority in the priority display area 62, the set priority information is reflected on the processes 22 and 28 of FIG. 2 or on the process 31 of FIG. 3 in a state that the priority can be changed after a change key 63 is selected and input. In this way, the priority is changed.

When the minimum required electric energy of the apparatuses in the operation of the vehicles cannot be secured by changing the priority, a guidance indicating a cause (reason) that the priority cannot be changed is displayed on a guidance display area 64 in FIG. 6, and the change is invalidated. To restore the priority as necessary, an initialization key 65 can be selected and input to restore the initial order of priority.

When the minimum required electric energy of the apparatuses in the operation of the vehicles cannot be secured due to a failure or the like of an apparatus after the priority is changed, a guidance indicating a cause (reason) that the priority cannot be changed is displayed on the guidance display area 64, and the initial order of priority can be restored after invalidating the change.

As a result, when the priority order of the priority activation control process is changed, the priority order can be simply and collectively changed only by the screen operation of the display device without inhibiting the operation of the vehicles.

The present invention according to the scope of the appended claims is not limited to the embodiments and includes various modified examples. The present invention according to the scope of the appended claims may not include all of the components described above, and a component of an embodiment can be added to the components of another embodiment.

## Claims

1. A vehicle information control device (1) with a load management function configured for setting power within capacity ranges of operating vehicle power supplies mounted on a plurality of vehicles;
wherein the vehicle information control device is configured to receive information (4) through a core transmission (5) from a plurality of loads of respective vehicle apparatuses (3A-F) mounted on a plurality of the vehicles, and to control activation/termination of each vehicle apparatus based on the received information, received information including power feeding states to the vehicles and states of auxiliary power supply devices of the vehicles;
wherein the vehicle information control device comprises a display device (40) configured for setting given vehicle apparatuses as targets of load capacity control, and for setting activation priority order of each vehicle apparatus with a screen operation;
wherein the vehicle information control device is configured, when the power feeding state to the vehicle is not an external feeding state from an external power supply outside of the vehicle and when the number of the operating vehicle power supplies is decreasing in the entire formation of the plurality of vehicles, to perform priority activation control of each vehicle apparatus according to the activation priority orders set by the display device (40), to set load limits of the loads of the given vehicle apparatuses selected by the display device (40), to calculate a surplus power from a total usable electric energy and a currently used electric energy, and to distribute the surplus power.

2. The vehicle information control device according to claim 1, wherein validation or invalidation of the load limits is configured to be individually set and changed for the vehicle apparatuses by screen operation of the display device (40).

3. The vehicle information control device according to claim 1 or 2, wherein in a case that a setting change by the screen operation of the display device (40) cannot be performed, a guidance indicating a cause is configured to be displayed to invalidate the setting change.

## Patentansprüche

1. Fahrzeuginformationen-Steuervorrichtung (1) mit einer Lastverwaltungsfunktion, die ausgelegt ist, um Leistung innerhalb von Kapazitätsbereichen von Leistungsversorgungen für den Fahrzeugbetrieb, die auf einer Vielzahl von Fahrzeugen angebracht sind, festzulegen;
wobei die Fahrzeuginformationen-Steuervorrichtung ausgelegt ist, um Informationen (4) durch eine Kernübertragung (5) von einer Vielzahl von Lasten entsprechender Fahrzeugvorrichtungen (3A-F), die auf einer Vielzahl der Fahrzeuge angebracht sind, zu empfangen und die Aktivierung/das Beenden jeder Fahrzeugvorrichtung auf Basis der empfangenen Informationen zu steuern, wobei die empfangenen Informationen Zustände der Leistungszufuhr zu den Fahrzeugen und Zustände von Hilfsleistungsversorgungsvorrichtungen der Fahrzeuge umfassen;
wobei die Fahrzeuginformationen-Steuervorrichtung eine Anzeigevorrichtung (40) umfasst, die ausgelegt ist, um bestimmte Fahrzeugvorrichtungen als Ziele einer Lastkapazitätssteuerung festzulegen und um eine Aktivierungsprioritätsreihenfolge jeder Fahrzeugvorrichtung durch eine Bildschirmbetätigung festzulegen;
wobei, wenn der Zustand der Leistungszufuhr zu dem Fahrzeug kein Zustand einer externen Zufuhr von einer externen Leistungsversorgung außerhalb des Fahrzeugs ist und wenn die Anzahl der Leistungsversorgungen für den Fahrzeugbetrieb im gesamten Verband der Vielzahl von Fahrzeugen abnimmt, die Fahrzeuginformationen-Steuervorrichtung ausgelegt ist, um eine Prioritätsaktivierungssteuerung jeder Fahrzeugvorrichtung gemäß den von der Anzeigevorrichtung (40) festgelegten Aktivierungsprioritätsreihenfolgen durchzuführen, um Lastgrenzen der Lasten der bestimmten von der Anzeigevorrichtung (40) ausgewählten Fahrzeugvorrichtungen festzulegen, um eine Überschussleistung aus einer verwendbaren elektrischen Gesamtenergie und einer aktuell verwendeten elektrischen Energie zu berechnen, und um die Überschussleistung zu verteilen.

2. Fahrzeuginformationen-Steuervorrichtung nach Anspruch 1, wobei eine Bestätigung oder Aufhebung der Lastgrenzen ausgelegt ist, um einzeln für die Fahrzeugvorrichtungen durch eine Bildschirmbetätigung der Anzeigevorrichtung (40) festgelegt oder geändert zu werden.

3. Fahrzeuginformationen-Steuervorrichtung nach Anspruch 1 oder 2, wobei wenn eine Einstellungsänderung durch die Bildschirmbetätigung der Anzeigevorrichtung (40) nicht durchgeführt werden kann, eine Hilfestellung, die einen Grund angibt, ausgelegt ist, um angezeigt zu werden, um die Einstellungsänderung aufzuheben.

## Revendications

1. Dispositif de commande d'informations de véhicule (1) avec une fonction de gestion de charge configurée pour régler la puissance dans des plages de capacité d'alimentations de puissance de véhicule en fonctionnement montées sur une pluralité de véhicules ;
dans lequel le dispositif de commande d'informations de véhicule est configuré pour recevoir des informations (4) via
une transmission centrale (5) à partir d'une pluralité de charges d'appareils de véhicule respectifs (3A-F) montés sur une pluralité de véhicules, et pour commander l'activation/l'arrêt de chaque appareil de véhicule sur la base des informations reçues, les informations reçues comprenant des états d'alimentation de puissance des véhicules et des états de dispositifs d'alimentation de puissance auxiliaires des véhicules ;
dans lequel le dispositif de commande d'informations de véhicule comprend un dispositif d'affichage (40) configuré pour régler des appareils de véhicule donnés en tant que cibles de commande de capacité de charge, et pour régler l'ordre de priorité d'activation de chaque appareil de véhicule avec une opération d'écran ;
dans lequel le dispositif de commande d'informations de véhicule est configuré, lorsque l'état d'alimentation de puissance du véhicule n'est pas un état d'alimentation externe à partir d'une alimentation de puissance externe à l'extérieur du véhicule et lorsque le nombre des alimentations de puissance de véhicule en fonctionnement diminue dans la formation entière de la pluralité de véhicules, pour effectuer une commande d'activation de priorité de chaque appareil de véhicule selon les ordres de priorité d'activation définis par le dispositif d'affichage (40), pour régler des limites de charge des charges des appareils de véhicule donnés sélectionnées par le dispositif d'affichage (40), pour calculer une puissance excédentaire à partir d'une énergie électrique totale utilisable et d'une énergie électrique actuellement utilisée, et pour distribuer la puissance excédentaire.

2. Dispositif de commande d'informations de véhicule selon la revendication 1, dans lequel
la validation ou l'invalidation des limites de charge est configurée pour être réglée individuellement et modifiée pour les appareils de véhicule par une opération d'écran du dispositif d'affichage (40).

3. Dispositif de commande d'informations de véhicule selon la revendication 1 ou 2, dans lequel
dans le cas où un changement de réglage par l'opération d'écran du dispositif d'affichage (40) ne peut pas être effectué, un guidage indiquant une cause est configuré pour être affiché afin d'invalider le changement de réglage.
